(19) Europäisches Patentamt
European Patent Office
Office européen des brevets

(11) EP 2 178 995 B1

(12) **EUROPÄISCHE PATENTSCHRIFT**

(45) Veröffentlichungstag und Bekanntmachung des Hinweises auf die Patenterteilung:
**02.09.2015 Patentblatt 2015/36**

(21) Anmeldenummer: **08775131.9**

(22) Anmeldetag: **16.07.2008**

(51) Int Cl.:
***C09J 5/06*** *(2006.01)*

(86) Internationale Anmeldenummer:
**PCT/EP2008/059310**

(87) Internationale Veröffentlichungsnummer:
**WO 2009/021801 (19.02.2009 Gazette 2009/08)**

(54) **VERBUNDELEMENT**

COMPOSITE ELEMENT

ÉLÉMENT DE JONCTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.08.2007 DE 102007038458**

(43) Veröffentlichungstag der Anmeldung:
**28.04.2010 Patentblatt 2010/17**

(73) Patentinhaber: **TESA SE**
**20253 Hamburg (DE)**

(72) Erfinder: **STRICKER, Rainer**
**08525 Plauen (DE)**

(56) Entgegenhaltungen:
**WO-A-2007/017332**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 178 995 B1

## Beschreibung

Die vorliegende Erfindung betrifft ein Verbundelement zur permanenten Verbindung zweier Kunststoffelemente, ein Kunststoffgehäuse mit einem entsprechenden Verbundelement sowie ein Verfahren zum Verbinden zweier Kunststoffelemente.

Aus dem Stand der Technik ist es bekannt zur permanenten Verbindung zweier Kunststoffe diese miteinander zu verschweißen. Das Verschweißen von Kunststoffen miteinander ist jedoch nur eingeschränkt möglich, insbesondere nämlich bei Kunststoffen, die relativ ähnliche Schmelztemperaturen aufweisen. Sofern die miteinander zu verbindenden Kunststoffe deutlich voneinander abweichende Schmelztemperaturen aufweichen, ist das Verschweißen problematisch, da die Schweißtemperatur mindestens der Temperatur des höheren der beiden Schmelzpunkte entsprechen muss. Damit wird der Kunststoff mit dem niedrigeren Schmelzpunkt schon frühzeitig einer hohen Temperaturbelastung ausgesetzt ist, die zu unerwünschten Gefügeveränderungen führen kann.

Als Alternative ist es bekannt, Klebebänder zur permanenten Verklebung von Kunststoffelementen einzusetzen. Jedoch besteht bei Klebebändern eine Schwierigkeit in der Handhabung. Die Positionierung der Kunststoffelemente und des Klebebandes muss nämlich mit dem ersten Versuch gelingen, da eine Nachpositionierung nur schwer durchführbar ist. Aus diesem Grund eignen sich Klebebänder beispielsweise auch nicht zur Verbindung der Kunststoffelemente, die das Gehäuse eines Airbags bilden. Bei der Befüllung des Kunststoffgehäuses besteht sonst nämlich die Gefahr, dass der Airbag-Sack jedenfalls zum Teil mit dem Klebeband in Berührung kommt und daran anhaftet.

Aus dem Stand der Technik (DE 10 2005 037 662 A1; DE 10 2005 037 663 A1) ist die Verwendung eines Klebebandes bekannt, welches erst durch einen thermischen Schweißvorgang eine permanent klebende Verbindung mit einem polymeren Untergrund auf der einen Seite und einem weiteren Stück des selben Klebebandes auf der anderen Seite eingeht.

Der vorliegenden Erfindung liegt das Problem zugrunde, ein Verbundelement zur permanenten Verbindung zweier Kunststoffelemente anzugeben, das sowohl einfach handhabbar als auch universell, insbesondere für unterschiedliche Kunststoffe, einsetzbar ist.

Die vorliegende Erfindung löst das zuvor erläuterte Problem bei einem Verbundelement mit den Merkmalen des Oberbegriffs des Anspruch 1 durch die Merkmale des kennzeichnenden Teils von Anspruch 1, bei einem Kunststoffgehäuse mit den Merkmalen des Oberbegriffs von Anspruch 13 durch die Merkmale des kennzeichnenden Teil von Anspruch 13 sowie durch ein Verfahren zum Verbinden zweier Kunststoffelemente gemäß Anspruch 17. Bevorzugte Ausgestaltungen und Weiterbildungen sind Gegenstand der jeweiligen Unteransprüche.

Die Lösung des Problems wird bei der Erfindung dadurch erreicht, dass die Kunststoffelemente weder, wie bisher üblich, unmittelbar miteinander verschweißt werden, noch das ein herkömmliches Klebeband zu deren permanenten Verbindung eingesetzt wird. Vielmehr werden die zu verbindenden Kunststoffelemente mittels eines zwischen diesen angeordneten Verbundelements miteinander verbunden. Das Verbundelement ist dabei als Flächenelement ausgebildet, weist also eine im Vergleich zu seiner Dicke große Flächenausdehnung auf. Zudem weist das Verbundelement eine Klebmasse auf, die zunächst jedoch nicht klebend ist. Somit können sowohl die Kunststoffelemente als auch das Verbundelement zunächst mehrfach neu positioniert werden, ohne dass eine klebende Verbindung entsteht und diese zur Nachpositionierung wieder gelöst werden müsste. Bei der Klebmasse handelt es sich sodann um eine Klebmasse, die aktivierbar ist, das heißt ihre Klebrigkeit erst durch einen Aktivierungsvorgang erhält.

Die Aktivierung der Klebmasse kann grundsätzlich durch eine beliebige thermische Einwirkung erfolgen. Insbesondere zur Verbindung von Kunststoffelementen hat sich jedoch gezeigt, dass die Aktivierung durch ein Ultraschall- oder ein Hochfrequenzschweißverfahren besonders geeignet ist. Die Aktivierung kann dann nämlich weitgehend temperaturunabhängig erfolgen, so dass Prozesszeiten verkürzt werden können und die miteinander zu verbindenden Kunststoffelemente keinen hohen, das Material belastenden Temperaturen ausgesetzt werden müssen.

Insbesondere beim Ultraschall- und Hochfrequenzschweißen wird gewährleistet, dass die Temperatureinwirkung möglichst lokal begrenzt auf das Verbundelement erfolgt, wodurch eine unerwünschte Gefügeveränderung an den Kunststoffelementen vermieden werden kann. Dadurch dass letztendlich das Verbundelement die permanente Verbindung zwischen den beiden Kunststoffelementen bewirkt, können zudem auch beliebige voneinander unterschiedliche Kunststoffe mittels eines derartigen Verbundelements miteinander verbunden werden. Insbesondere können die jeweiligen Kunststoffelemente unterschiedliche Schmelzpunkte aufweisen insbesondere auch mit einer Schmelzpunktdifferenz von bis zu 30° C vorzugsweise von bis zu 50° C.

Das Ultraschallschweißen ist ein Verfahren zum Fügen von Kunststoffen. Dabei können ohne ein entsprechendes Verbindungselement grundsätzlich nur thermoplastische Kunststoffe geschweißt werden. Wie bei allen anderen Schweißverfahren muss an der Schweißstelle das Material durch Zuführen von Wärme aufgeschmolzen werden. Beim Ultraschallschweißen wird die notwendige Wärme durch eine hochfrequente mechanische Schwingung erzeugt. Das Hauptmerkmal dieses Verfahrens ist, dass die zum Schweißen notwendige Wärme zwischen den Bauteilen durch Molekular- und Grenzflächenreibung in den Bauteilen entsteht. Somit gehört das Ultraschallschweißen zur Gruppe des Reibschweißens.

Das hierzu erforderliche Ultraschallschweißgerät besteht im Wesentlichen aus den Baugruppen:

- Generator
- Schwinggebilde (Sonotrode)
- Amboss

Erzeugt wird die Ultraschallfrequenz mit Hilfe des Generators. Dieser wandelt die Netzspannung in eine Hochspannung und Hochfrequenz um. Durch ein geschirmtes Kabel wird die elektrische Energie zu einem Ultraschall-Wandler, dem so genannten Konverter übertragen. Der Konverter arbeitet nach dem piezoelektrischen Effekt, bei dem die Eigenschaft bestimmter Kristalle, die sich bei angelegtem elektrischen Wechselfeld ausdehnen und zusammenziehen, genutzt wird. Hierdurch entstehen mechanische Schwingungen, die über ein Amplitudentransformationsstück auf die Sonotrode (das so genannte Schweißhorn) übertragen werden. Die Amplitude der Schwingung kann durch das Amplitudentransformationsstück in ihrer Größe beeinflusst werden. Die Schwingungen werden unter Druck von 2 bis 5 $N/mm^2$ auf ein zwischen der Sonotrode und einem Amboss eingespanntes Werkstück übertragen, wobei durch Molekular- und Grenzflächenreibung die zum Plastifizieren notwendige Wärme erzeugt wird. Durch die örtliche Temperatur beginnt der jeweilige Kunststoff beziehungsweise vorliegend das Verbundelement zu erweichen und der Dämpfungskoeffizient steigt. Die Zunahme des Dämpfungsfaktors führt zu weiterer Wärmeerzeugung, was den Effekt einer sich selbst beschleunigenden Reaktion gewährleistet. Dieses Verfahren ist gekennzeichnet durch sehr geringe Schweißzeiten und dadurch oft hohe Wirtschaftlichkeit.

Nach dem Auskühlen ist die Schweißverbindung fest. Da die Sonotrode dauerhaft Ultraschallschwingungen ausgesetzt ist, sind die Anforderungen an das Material sehr hoch. Meistens wird daher carbidbeschichtetes Titan eingesetzt.

Das Hochfrequenzschweißen hingegen ist ein Pressschweißverfahren unter Einwirkung von Wärme, welche sich auf der Basis der ohmschen Verluste in den Fügeteilen entwickelt. Die beiden Variationen bei der Anwendung von HF-Strom in der Schweißtechnik sind die induktive und konduktive Energieeinbringung. Beim konduktiven HF-Schweißen erfolgt die Energieeinleitung über Stromschienen oder Schleifkontakte, während dies bei der induktiven Variante durch eine über den Fügeteilen liegenden Induktionsspule geschieht. Der durch elektrodynamische Effekte an den Fügeteilen fließende hochfrequente Wechselstrom erwärmt die Verbindungsstelle und durch Kraftaufbringung werden die Teile formschlüssig miteinander verbunden. Die zu verschweißenden Thermoplaste müssen einen dielektrischen Verlustfaktor von $d > 0{,}01$ besitzen. Derzeit wird das HF-Schweißen mit induktiver Energieeinbringung in der Industrie hauptsächlich zur Herstellung von Längsnahtrohren eingesetzt.

In bevorzugter Ausgestaltung handelt es sich bei der Klebmasse um eine Klebmasse, die möglichst kurze Prozesszeiten ermöglicht. In Kombination mit den zuvor beschriebenen Schweißverfahren, kann so der Gesamte Prizess des Verbindens der Kunststoffelemente sehr schnell und effizient erfolgen. Es hat sich gezeigt, dass geeignete Klebmassen Prozesszeiten von unterhalb 5 sec, vorzugsweise von unterhalb 2 sec, weiter vorzugsweise von unterhalb 1 sec zur Aktivierung der Klebmasse ermöglichen. Derartig kurze Aktivierungszeiten können beispielsweise mit Klebmassen basierend auf Phenolharz beim Ultraschallschweißen erzielt werden.

Je nach den jeweils erforderlichen Eigenschaften der konkreten Verbindung der beiden Kunststoffelemente können unterschiedlich Ausbildungen des Verbundelements weiter bevorzugt sein, etwa solche, bei denen das Flächenelement ein Träger umfasst oder aber trägerfrei ausgebildet ist. Eine trägerfreie Ausbildung, etwa als Transferklebeband mit zwei unterschiedlichen Klebmassen oder mit nur einer Klebemasse ist dann sinnvoll, wenn das Verbundelement insgesamt eine möglichst geringe Höhe aufweisen soll, etwa bei Verklebungen im Miniaturbereich. Demgegenüber ist die Ausbildung mit einem zusätzlichen Träger zum Beispiel dann besonders günstig, wenn eine besonders hohe mechanische Stabilität des Verbundelements selbst erforderlich ist, etwa bei hochbelasteten Verbindungen sowie zur Verbesserung der Stanzbarkeit bei Verwendung von Stanzteilen als Verbundelement.

Als Klebmasse für das Verbundelement kommen insbesondere phenolharzbasierende Klebmasse und/oder Klebmassen auf Basis von Nitrilkautschuk in Frage.

Geeignete Nitrilbutadienkautschuke sind besipielsweise unter Europrene™ von Eni Chem, oder unter Krynac™ und Perbunan™ von Bayer, oder unter Breon™ und Nipol N™ von Zeon erhältlich. Hydrierte Nitril-Butadien Kautschuke sind unter Therban™ von Bayer und unter Zetpol™ von Zeon erhältlich. Nitrilbutadienkautschuke werden entweder heiß oder kalt polymerisiert.

Die Nitrilkautschuke weisen in einer bevorzugen Auslegung der Erfindung einen Acrylnitril von 15 bis 45 % auf. Um eine vollständige Phasenseparierung mit den Reaktivharzen zu vermeiden, sollte der Acrylnitrilanteil bei größer 15 % wiederum bezogen auf den Gesamtanteil liegen. Ein weiteres Kriterium für den Nitrilkautschuk ist die Mooney-Viskosität. Da eine hohe Flexibilität bei tiefen Temperaturen gewährleistet werden muss, sollte die Mooney-Viskosität unterhalb 100 liegen (Mooney ML 1+4 bei 100 °C). Kommerzielle Beispiele für solche Nitrilkautschuke sind z.B. Nipol™ N917 der Firma Zeon Chemicals.

Die Carboxyl-, Amin-, Epoxy- oder Methacrylat-terminiertem Nitrilbutadienkautschuke können als Zusatzkomponenten eingesetzt werden. Solche Elasttomere weisen besonders bevorzugt ein Molekulargewicht von $M_w$ < 20.000 g/mol und einen Acrylnitril von 5 % bis 30 % auf. Um eine optimale Mischbarkeit zu erzielen, sollte der Acrylnitril zumindestens bei größer 5 % wiederum bezogen auf den Gesamtanteil Elastomer liegen. Kommerzielle Beispiele für solche terminierten Nitrilkautschuke sind z.B. Hycar™ der Firma Noveon.

Für Carboxy-terminierte Nitrilbutadienkautschuke werden bevorzugt Kautschuke eingesetzt mit einer Carbonsäurezahl von 15 bis 45, sehr bevorzugt von 20 bis 40. Die Carbonsäurezahl wird als Wert in Milligramm KOH angegeben, der benötigt wird um die Carbonsäure komplett zu neutralisieren.

Für Amin-terminierte Nitrilbutadienkautschuke werden besonders bevorzugt Kautschuke mit einem Amin-Wert von 25 bis 150, mehr bevorzugt von 30 bis 125 eingesetzt. Der Amin-Wert bezieht sich auf die Amin-Äquivalente, die durch Titration gegen HCl in ethanolischer Lösung bestimmt werden. Der Amin-Wert wird dabei auf Amin-Äquivalente pro 100 Gramm Kautschuk bezogen, aber letztendlich durch 100 geteilt.

Der Anteil der Reaktivharze in der aktivierbaren Klebmass beträgt zwischen 75 und 30 Gew.-%. Eine sehr bevorzugte Gruppe umfasst Epoxy-Harze. Das Molekulargewicht $M_w$ der Epoxy-Harze variiert von 100 g/mol bis zu maximal 10000 g/mol für polymere Epoxy-Harze.

Die Epoxy-Harze umfassen zum Beispiel das Reaktionsprodukt aus Bisphenol A und Epichlorhydrin, Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Als Novolak-Harze können z.B. eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich in einer weiteren bevorzugten Auslegung als Reaktivharze auch Phenolharze, wie z.B. YP 50 von Toto Kasei, PKHC von Union Carbide Corp. und BKR 2620 von Showa Union Gosei Corp. einsetzen. Weiterhin lassen sich als Reaktiveharze auch Phenolresolharze auch in Kombination mit anderen Phenolharzen einsetzen.

Weiterhin lassen sich als Reaktivharze auch Polyisocyanate, wie z.B. Coronate™ L von Nippon Polyurethan Ind., Desmodur™ N3300 oder Mondur™ 489 von Bayer einsetzen.

In einer vorteilhaften Ausführung der aktivierbaren Klebmasse sind außerdem klebkraftsteigernde (klebrigmachende) Harze zugesetzt; sehr vorteilhaft zu einem Anteil von bis zu 30 Gew.-%, bezogen auf die Gesamtmischung der aktivierbaren Klebmasse. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit den Nitrilkautschuken kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Um die Reaktion zwischen den beiden Komponenten zu beschleunigen, lassen sich auch optional Vernetzer und Beschleuniger in die Mischung zu additivieren.

Als Beschleuniger eignen sich z.B. Imidazole, kommerziell erhältlich unter 2M7, 2E4MN, 2PZ-CN, 2PZ-CNS, P0505, L07N von Shikoku Chem. Corp. oder Curezol 2MZ von Air Products. Weiterhin eignen sich als Vernetzer HMTA (Hexamethylentetramin) Zusätze.

Weiterhin lassen sich auch Amine, insbesondere tert.-Amine zur Beschleunigung einsetzen.

Neben Reaktivharzen lassen sich auch Weichmacher einsetzen. Hier können in einer bevorzugten Ausführung der Erfindung Weichmacher auf Basis Polyglykolethern, Polyethylenoxiden, Phosphatestern, aliphatische Carbonsäureester und Benzoesäureester eingesetzt werden. Weiterhin lassen sich auch aromatische Carbonsäureester, höhermolekulare Diole, Sulfonamide und Adipinsäureester einsetzen.

Weiterhin können optional Füllstoffe (z.B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebverstärkende Additive und

Thermoplaste, Compoundierungsmittel und/oder Alterungsschutzmittel, z.B. in Form von primären und sekundären Antioxidantien oder in Form von Lichtschutzmitteln zugesetzt sein.

In einer weiteren bevorzugten Ausführungsform werden weitere Additive hinzugesetzt, wie z.B. Polyvinylformal, Polyacrylat-Kautschuke, Chloropren-Kautschuke, Ethylen-Propylen-Dien Kautschuke, Methyl-Vinyl-Silikon Kautschuke, Fluorsilikon Kautschuke, Tetrafluorethylen-Propylen-Copolymer Kautschuke, Butylkautschuke, Styrol-Butadien Kautschuke.

Polyvinylbutyrale sind unter Butvar™ von Solucia, unter Pioloform™ von Wacker und unter Mowital™ von Kuraray erhältlich. Polyacrylat Kautschuke sind unter Nipol AR™ von Zeon erhältlich. Chloropren Kautschuke sind unter Baypren™ von Bayer erhältlich. Ethylen-Propylen-Dien Kautschuke sind unter Keltan™ von DSM, unter Vistalon™ von Exxon Mobile und unter Buna EP™ von Bayer erhältlich. Methyl-Vinyl-Silikon Kautschuke sind unter Silastic™ von Dow Corning und unter Silopren™ von GE Silicones erhältlich. Fluorsilikon Kautschuke sind unter Silastic™ von GE Silicones erhältlich. Butyl Kautschuke sind unter Esso Butyl™ von Exxon Mobile erhältlich. Styrol-Butadien Kautschuke sind unter Buna S™ von Bayer, und Europrene™ von Eni Chem und unter Polysar S™ von Bayer erhältlich.

Polyvinylformale sind unter Formvar™ von Ladd Research erhältlich.

In einer weiteren bevorzugten Ausführungsform werden Additive hinzugesetzt, wie z.B. thermoplastische Materialien aus der Gruppe der folgenden Polymere: Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierte Polymere, wie z. B. Polytetrafluorethylen, Polyamide, Ethylenvinylacetate, Polyvinylacetate, Polyimide, Polyether, Copolyamide, Copolyester, Polyolefine, wie z.B. Polyethylen, Polypropylen, Polybuten, Polyisobuten, und Poly(metha)crylate.

Die Klebkraft der aktivierbaren Klebmasse kann durch weitere gezielte Additivierung gesteigert werden. So lassen sich z.B. Polyimin- oder Polyvinylacetat-Copolymere auch als klebkraftfördernde Zusätze verwenden.

Der aktivierbaren Klebmasse können aber auch thermoplastischen Materialien beigesetzt werden. Die thermoplastischen Materialien werden bevorzugt aus der Gruppe der folgenden Polymere gewählt: Polyurethane, Polyester, Polyamide, Ethylenvinylacetate, Synthesekautschuke, wie z.B. Styrolisopren Di und Triblockcopolymere (SIS), Styrolbutadien Di- und Triblockcopolymere (SBS), Styrolethylenbutadien Di- und Triblockcopolymer (SEBS), Polyvinylacetat, Polyimide, Polyether, Copolyamide, Copolyester, Polyolefine, wie z.B. Polyethylen, Polypropylen, oder Poly(metha)crylate, wobei auch Mischungen dieser eingesetzt werden können. Die Aufzählung besitzt keinen Anspruch auf Vollständigkeit.

In einer weiteren Ausführung der Erfindung werden thermoplastische Blends aus einer Polymergruppe gewählt, wobei sich dann die Polymere in ihrer chemischen Zusammensetzung unterscheiden.

Zur Optimierung der klebtechnischen Eigenschaften und des Aktivierungsbereiches lassen sich optional Klebkraft-steigernde Harze oder Reaktivharze hinzusetzten. Der Anteil der Harze beträgt zwischen 2 und 50 Gew.-% bezogen auf den thermoplastischen Material.

Als zuzusetzende klebrigmachende Harze, Reaktivharze oder Additive lassen sich alle zuvor genannten Möglichkeiten zur Optimierung der Nitrilkautschukrezepturen einsetzen.

Weiterhin lassen sich aktivierbare Klebmassen auf Acrylatbasis einsetzen. So bestehen dann die aktivierbaren Klebmassen in einer besonders bevorzugten Auslegung zu einem Basispolymer a) bestehend aus

a1) 40 bis 95 Gew.-% Acrylsäureester und/oder Methacrylsäureester mit der folgenden Formel

$$CH_2 = CH(R_1)(COOR_2),$$

wobei $R_1$ = H und/oder $CH_3$ und $R_2$ = H und/oder Alkylketten mit 1 bis 30 C-Atomen sind.

a2) 5 bis 30 Gew.-% eines copolymerisierbaren Vinylmonomers mit zumindestens einer Carbonsäure und/oder Sulfonsäure- und/oder Phosphonsäuregruppe

a3) 1 bis 10 Gew.-% eines copolymerisierbaren Vinylmonomers mit zumindestens einer Epoxygruppe oder einer Säureanhydridfunktion

a4) 0 bis 20 Gew.-% eines copolymerisierbaren Vinylmonomers, welches mit der funktionellen Gruppe zur Kohäsionssteigerung, der Erhöhung der Reaktivität der Vernetzung, oder zur direkten Vernetzung beitragen kann,

und b) 5 - 50 Gew.-% eines Epoxy-Harzes oder einer Mischung aus mehreren Epoxy-Harzen

Das Polymer a) kann eine aktivierbare Haftklebemasse umfassen, die unter Temperatureinwirkung und optionalen Druck haftklebrig wird und nach der Verklebung und Abkühlen durch die Verfestigung eine hohe Klebkraft aufbaut. Je nach Anwendungstemperatur weisen diese aktivierbaren Haftklebemassen unterschiedliche statische Glasübergangstemperaturen $T_{G,A}$ oder einen Schmelzpunkte $T_{S,A}$ auf.

In einer sehr bevorzugten Auslegung werden für die Monomere a1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. 2-Ethylhexylacrylat. Weitere einzusetzende Verbindungsklassen, die ebenfalls in geringen Mengen unter c1) hinzugesetzt werden können sind Methylmethacrylate, Cyclohexylmethacrylate, Isobornylacrylat und Isobornylmethacrylate.

In einer bevorzugten Weise werden als Monomere a2) Itaconsäure, Acrylsäure, Methacrylsäure, Vinylessigsäure, Fumarsäure, Crotonsäure, Aconitsäure, Dimethylacrylsäure, β-Acryloyloxypropionsäure, Trichloracrylsäure, Vinylphosphonsäure, Vinylsulfonsäure und Vinylsulfonsäure eingesetzt werden.

In einer bevorzugten Weise werden als Monomere a3) Glycidylmethacrylat Maleinsäureanhydrid und Itaconsäureanhydrid eingesetzt.

In einer sehr bevorzugten Auslegung werden für die Monomere a4) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren sehr bevorzugten Auslegung für die Monomere a4) Monomere mit folgenden funktionellen Gruppen eingesetzt: Hydroxy-, Säureamid-, Isocyanato- oder Aminogruppen.

Weitere besonders bevorzugte Beispiele für die Komponente a4) sind Hydroxyethylacrylat, Hydroxypropylacrylat, Hydroxyethylmethacrylat, Hydroxypropylmethacrylat, Allylalkohol, Acrylamid, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Tetrahydrofurfurylacrlyat, wobei diese Aufzählung nicht abschließend ist.

In einer weiteren bevorzugten Auslegung werden für die Komponente a4) aromatische Vinylverbindungen eingesetzt, wobei bevorzugt die aromatischen Kerne aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere wiederum dermaßen gewählt, daß die resultierenden Polymere als industriell verwendbare Klebemassen oder Haftklebemassen eingesetzt werden können, insbesondere derart, daß die resultierenden Polymere klebende oder haftklebende Eigenschaften entsprechend des "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der ***Fox***-Gleichung (G1) bei der Zusammenstellung der Monomermischung, welche der Polymerisation zugrunde liegt, erzielt werden. Für Haftklebemassen liegt die statische Glasübergangstemperatur des resultierenden Polymers vorteilhaft unterhalb 15°C.

Zur Erzielung einer Glasübergangstemperatur $T_{G,A}$ der Polymere von $T_{G,A} \geq 30$ °C für Hitze-aktivierbare Klebemasse werden entsprechend dem vorstehend gesagten die Monomere sehr bevorzugt derart ausgesucht und die mengenmäßige Zusammensetzung der Monomermischung vorteilhaft derart gewählt, daß sich nach der ***Fox***-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Klebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die mittleren Molekulargewichte $M_n$ der bei der radikalischen Polymerisation entstehenden Haftklebemassen werden sehr bevorzugt derart gewählt, daß sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide des Typs (NIT 1) oder (NIT 2) eingesetzt:

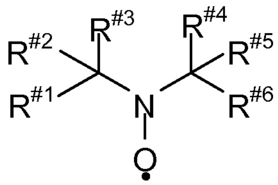

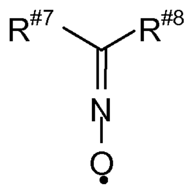

(NIT 1) (NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{\#9}$, Alkoxide $-OR^{\#10}$ und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit zum Aufbau von Blockcopolymeren als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl

- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Kaschierklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (der EP 0 824 111 A1; der EP 826 698 A1; der EP 824 110 A1; der EP 841 346 A1; der EP 850 957 A1) eingesetzt werden. Die unterschiedlichen Möglichkeiten der ATRP sind ferner in den Schriften der US 5,945,491 A, der US 5,854,364 A und der US 5,789,487 A beschrieben.

Weiterhin vorteilhaft kann das erfindungsgemäß genutzte Polymer über eine anionische Polymerisation herzustellen. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren [a1)-a4)] ist. Die Molmasse des herzustellenden Polymers wird durch das Verhältnis von Initiatorkonzentration zu Monomerkonzentration vorgegeben.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozess wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R"'-S-C(S)-S-R"' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei $\Phi$ ein Phenylring, der unfunktionalisiert

oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann.

Der Phenylring ɸ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Liste Anspruch auf Vollständigkeit erhebt.

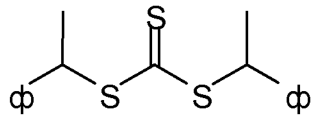

(TTC 1)

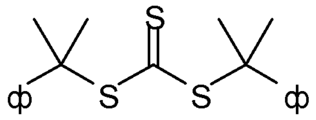

(TTC 2)

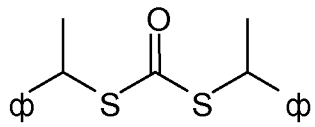

(THI 1)

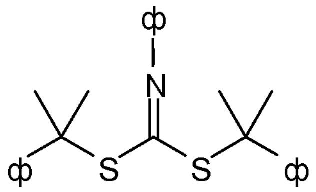

(THI 2)

Außerdem können Thioester der allgemeinen Struktur

$R^{\$1}$-C(S)-S-$R^{\$2}$ (THE)

zum Einsatz kommen, insbesondere, um asymmetrische Systeme herzustellen. Dabei können $R^{\$1}$ und $R^{\$2}$ unabhängig voneinander gewählt werden und $R^{\$1}$ ein Rest aus einer der folgenden Gruppen i) bis iv) und $R^{\$2}$ ein Rest aus einer der folgenden Gruppen i) bis iii) sein kann:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen.
ii) $-NH_2$, -NH-$R^{\$3}$, -N$R^{\$3}R^{\$4}$, -NH-C(O)-$R^{\$3}$, -N$R^{\$3}$-C(O)-$R^{\$4}$, -NH-C(S)-$R^{\$3}$, -N$R^{\$3}$-C(S)-$R^{\$4}$,

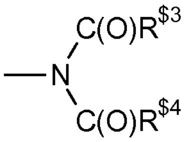 , 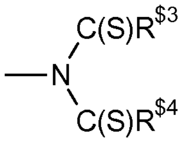 , 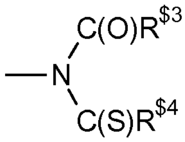

wobei $R^{\$3}$ und $R^{\$4}$ unabhängig voneinander gewählte Reste aus der Gruppe i) sind.
iii) -S-$R^{\$5}$, -S-C(S)-$R^{\$5}$, wobei $R^{\$5}$ ein Rest aus einer der Gruppen i) oder ii) sein kann.
iv) -O-$R^{\$6}$, -O-C(O)-$R^{\$6}$, wobei $R^{\$6}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat,

Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.

Die beschirebenen Epoxidharze umfassen die gesamte Gruppe der Epoxyverbindungen. So können die Epoxy-Harze Monomere, Oligomere oder Polymere sein. Polymere Epoxy-Harze können aliphatischer, cycloaliphatischer, aromatischer oder heterocyclischer Natur sein. Die Epoxy-Harze weisen bevorzugt zumindestens 2 Epoxy-Gruppen auf, die zur Vernetzung genutzt werden können.

Das Molekulargewicht der Epoxy-Harze variiert von 100 g/mol bis zu maximal 25000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

In einer möglichen Ausführungsform enthält die Klebmasse weitere Rezeptierungsbestandteile, wie zum Beispiel Füllstoffe, Pigmente, rheologische Additive, Additive zur Verbesserung der Haftung, Weichmacher, Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Es kommen alle Arten organischer oder anorganischer Farbpigmente in Frage, beispielsweise Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide, Epoxide oder Silane sein.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane.

Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, $(C\text{-}5)_2$-Harze), gemischte C-5 / C-9-Harze, hydrierte und teilhydrierte Derivate der genannten Typen, Harze aus Styrol oder $\alpha$-Methylstyrol sowie Terpen-Phenolharze und weitere wie aufgeführt in Ullmanns Enzyklopädie der technischen Chemie, Band 12, S. 525 - 555 (4. Aufl.), Weinheim.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Die Rezeptierung der Klebmasse mit weiteren Bestandteilen, wie zum Beispiel Füllstoffen und Weichmachern, ist ebenfalls Stand der Technik.

Ein Weiterer Aspekt der vorliegenden Erfindung liegt in der Verwendung des zuvor beschriebenen Verbundelements zur permanenten Verbindung zweier Kunststoffelemente, insbesondere aus unterschiedlichen Kunststoffen.

Als Ergebnis dieser Verwendung ergibt sich eine besonders effektive wie einfache Möglichkeit Kunststoffelemente permanent miteinander zu verbinden, ohne die Kunststoffelemente selbst beim Prozess des Verbindens zu beschädigen.

Schließlich wird die Aufgabe durch ein Verfahren zum Verbinden zweier Kunststoffelemente, insbesondere zur Herstellung eines Kunststoffgehäuses, mittels eines Verbundelements, insbesondere wie es zuvor beschrieben wurde, gelöst. Bei diesem Verfahren wird ein als Flächenelement ausgebildetes Verbundelement eingesetzt, das zumindest eine Klebmasse aufweist, die zunächst nichtklebend ist. Dieses Verbundelement wird zwischen den zu verbindenden Kunststoffelementen angeordnet. Erst nachdem das Verbundelement sowie die beiden Kunststoffelemente in der gewünschten Lage angeordnet sind, wird die Klebmasse aktiviert. Dabei wird durch die Aktivierung die Klebmasse eine permanente Verbindung zwischen den Kunststoffelementen erzeugt. Gegenüber Schweißverfahren ohne Verwendung eines Verbundelements bietet das erfindungsgemäße Verfahren den Vorteil, dass ein Auftreten von Gefügeveränderungen in den Kunststoffelementen reduziert oder vollständig vermieden werden kann. Gegenüber dem Einsatz herkömmlicher Klebebänder wird die Positionierung der Kunststoffelemente und des Verbundelements selbst und damit die gesamte Handhabung deutlich vereinfacht. Dennoch wird eine permanente Verbindung erzielt, die auch gegenüber größeren Belastungskräften standhält.

Von Vorteil ist dabei auch, dass zwei Kunststoffelemente aus von einander unterschiedlichen Kunststoffen miteinander verbunden werden können. Das Verbundelement dient dabei als Puffer, der einen Temperaturunterschied zwischen den zu verbindenden Kunststoffelementen ausgleicht und somit die Gefügeveränderung in den Kunststoffelementen verringert.

Die Aktivierung der Klebmasse ist auf besonders einfache Weise mittels Ultraschallschweißens oder Hochfrequenzschweißens durchführbar. Insbesondere derartige Schweißvorgänge ermöglichen eine Aktivierung der Klebmasse in sehr kurzen Prozesszeiten. So sind beispielsweise Prozesszeiten von unterhalb 5 sec, möglich. Vorzugsweise erfolgt die Aktivierung der Klebmasse in einer Prozesszeit unterhalb 2 sec, weiter vorzugsweise unterhalb 1 sec.

Weitere Einzelheiten, Merkmale, Ziele und Vorteile der vorliegenden Erfindung werden nachfolgend anhand einer Zeichnung eines bevorzugten Ausführungsbeispiels näher erläutert. In der Zeichnung zeigt

Fig. 1 in schematischer Darstellung eine Explosionsansicht eines Kunststoffgehäuses mit einem erfindungsgemäßen Verbundelement.

Fig. 1 zeigt ein Kunststoffgehäuse, bei dem es sich hier um das Gehäuse eines Airbags handelt. Das Kunststoffgehäuse weist zwei Kunststoffelemente 1, 2 und ein Verbundelement 3 auf. Das Verbundelement 3 ist zwischen den beiden Kunststoffelementen 1, 2 angeordnet und verbindet die beiden Kunststoffelemente 1, 2 permanent miteinander. Innerhalb des aus den beiden Kunststoffelemente 1, 2 gebildeten Kunststoffgehäuses ist ein Airbag-Sack 4 eingeschlossen, der insbesondere mittels Unterdruck in das Kunststoffgehäuse eingezogen wird. Bei der vorliegenden Ausgestaltung kann der Airbag-Sack problemlos in dem Kunststoffgehäuse angeordnet werden. Insbesondere besteht beim Einfügend es Airbag-Sacks 4 nicht die Gefahr, dass dieser mit dem Verbundelement 3 verklebt, da dass Verbundelement 3 erst zu einem späteren Zeitpunkt aktiviert wird.

Das Verbundelement 3 ist hierfür als Flächenelement mit zumindest einer Klebmasse ausgebildet. Diese Klebmasse ist zunächst jedoch nicht klebend. Vielmehr erlangt die Klebmasse ihre Klebrigkeit erst durch eine Aktivierung. Im hier gezeigten Zustand, die beiden Kunststoffelemente 1, 2 sind bereits durch das Verbundelement 3 permanent miteinander verbunden, ist die Klebmasse bereits aktiviert worden und nunmehr permanent klebend.

Die beiden Kunststoffelemente 1, 2 bestehen dabei aus unterschiedlichen Kunststoffen. Das Kunststoffelement 1 besteht nämlich aus HDPE und das Kunststoffelement 2 aus PA6GF40, also aus Polyamid mit einem 40 %igen Glasfaseranteil. Das Verbundelement 3 ermöglicht also eine permanente Verbindung unterschiedlicher Kunststoffe. Dabei ist ferner von Bedeutung, dass aufgrund der gezielten Aktivierung der Klebmasse das Auftreten von Gefügeveränderungen in den Kunststoffelementen 1, 2 reduziert oder ganz vermieden werden kann. Bei einem herkömmlichen Schweißvorgang ohne Verbundelement oder bei einer unspezifischen Erwärmung würden daher ohne entsprechende andersartige Vorkehrungen in der Regel deutlich größere Gefügeveränderungen auftreten.

Die permanente Verbindung der beiden Kunststoffelemente 1, 2 wurde hier durch eine Aktivierung eines Verbundelements 3 mittels Ultraschallschweißens erzielt. Hierzu wurde an der Sonotrode bei Dauerbetrieb eine Temperatur von ca. 55-60° C eingestellt, die Frequenz betrug 50 Hz. Bei den so eingestellten Parametern konnte bei den vorliegenden Materialien eine Prozesszeit für die Aktivierung des Verbundelements 3 von unter 1 sec erzielt werden. Bereits nach kurzem Abkühlen auf Raumtemperatur war das Kunststoffgehäuse voll belastbar.

## Patentansprüche

1. Verfahren zum Verbinden zweier Kunststoffelemente (1, 2), insbesondere zur Herstellung eines Kunststoffgehäuses, mittels eines Verbundelements (3),

wobei das Verbundelement (3) als Flächenelement mit zumindest einer Klebmasse ausgebildet ist und die Klebmasse zunächst nicht klebend ist, bei dem das Verbundelement (3) zwischen den Kunststoffelementen (1, 2) angeordnet wird und
bei dem die Klebmasse aktiviert und die Kunststoffelemente (1, 2) so mittels des Verbundelements (3) permanent miteinander verbunden werden.

**2.** Verfahren nach Anspruch 1, **dadurch gekennzeichnet,**
**dass** zwei Kunststoffelemente (1, 2) aus voneinander unterschiedlichen Kunststoffen miteinander verbunden werden, insbesondere mit voneinander unterschiedlichen Schmelzpunkten, vorzugsweise mit einer Schmelzpunktdifferenz von bis zu 30°C, weiter vorzugsweise mit einer Schmelzpunktdifferenz von bis zu 50°C.

**3.** Verfahren nach Anspruch 1 oder 2, **dadurch gekennzeichnet,**
**dass** die Aktivierung der Klebmasse mittels Ultraschallschweißens und/oder Hochfrequenzschweißens durchgeführt wird.

**4.** Verfahren nach einem der Ansprüche 1 bis 3, **dadurch gekennzeichnet,**
**dass** die Aktivierung der Klebmasse in einer Prozesszeit von unterhalb 5 sec., vorzugsweise unterhalb 2 sec., weiter vorzugsweise unterhalb 1 sec. erfolgt.

**5.** Verfahren nach einem der Ansprüche 1 bis 4, **dadurch gekennzeichnet,**
**dass** die Kunststoffelemente (1, 2) im Wesentlichen keine Gefügeveränderung erfahren.

**6.** Verfahren nach einem der Ansprüche 1 bis 5, **dadurch gekennzeichnet,**
**dass** die Klebmasse durch die Aktivierung mit dem Kunststoff verschmilzt.

**7.** Verfahren nach einem der Ansprüche 1 bis 6, **dadurch gekennzeichnet,**
**dass** die Klebmasse mittels Ultraschallschweißens und/oder Hochfrequenzschweißens aktivierbar ist.

**8.** Verfahren nach einem der voranstehenden Ansprüche, **dadurch gekennzeichnet,**
**dass** die Klebmasse innerhalb einer Prozesszeit von unterhalb 5 sec., vorzugsweise von unterhalb 2 sec., weiter vorzugsweise von unterhalb 1 sec. aktivierbar ist.

**9.** Verfahren nach einem der voranstehenden Ansprüche, **dadurch gekennzeichnet,**
**dass** selbiges unmittelbar nach dem Abkühlen auf Raumtemperatur belastbar ist.

**10.** Verfahren nach einem der voranstehenden Ansprüche, **dadurch gekennzeichnet,**
**dass** das Flächenelement trägerfrei ausgebildet ist.

**11.** Verfahren nach einem der Ansprüche 1 bis 9, **dadurch gekennzeichnet,**
**dass** das Flächenelement einen permanenten Träger aufweist.

**12.** Verfahren nach einem der voranstehenden Ansprüche, **dadurch gekennzeichnet,**
**dass** die Klebmasse eine hohe Klebkraft auf Kunststoff aufweist.

**13.** Verfahren nach einem der voranstehenden Ansprüche, **dadurch gekennzeichnet,**
**dass** die Klebmasse ausgebildet ist, Kunststoffelemente, insbesondere aus voneinander unterschiedlichen Kunststoffe, permanent miteinander zu verbinden.

**14.** Verfahren nach einem Anspruch 13, **dadurch gekennzeichnet,**
**dass** die Klebmasse ausgebildet ist Kunststoffelemente (1, 2) aus unterschiedlichen Kunststoffen mit unterschiedlichem Schmelzpunkt permanent miteinander zu verbinden,
insbesondere aus Kunststoffen mit einer Schmelzpunktdifferenz von bis zu 30°C, vorzugsweise mit einer Schmelzpunktdifferenz von bis zu 50°C.

**15.** Verfahren nach einem der voranstehenden Ansprüche, **dadurch gekennzeichnet,**
**dass** die Klebmasse eine phenolharzbasierende Klebmasse ist.

**16.** Verfahren nach einem der Ansprüche 1 bis 15, **dadurch gekennzeichnet,**

**dass** die Klebmassen auf einem Nitrilkautschuk basiert.

## Claims

1. Process for the connection of two plastics elements (1, 2), in particular for the production of a plastics housing, by means of a composite element (3),
where the composite element (3) has been designed as a sheet with at least one adhesive mass, and the adhesive mass is initially non-adherant, where the composite element (3) is arranged between the plastics elements (1, 2) and where the adhesive mass is activated and the plastics elements (1, 2) are thus permanently connected to one another by means of the composite element (3).

2. Process according to Claim 1, **characterized in that**
two plastics elements (1, 2) made of plastics that differ from one another are connected to one another, in particular with melting points that differ from one another, preferably with a melting-point difference of up to 30°C, more preferably with a melting-point difference of up to 50°C.

3. Process according to Claim 1 or 2, **characterized in that**
the activation of the adhesive mass is achieved by means of an ultrasound welding process and/or a high-frequency welding process.

4. Process according to any of Claims 1 to 3, **characterized in that**
the activation of the adhesive mass takes place within a processing time of less than 5 sec., preferably less than 2 sec., more preferably less than 1 sec.

5. Process according to any of Claims 1 to 4, **characterized in that**
the plastics elements (1, 2) in essence experience no alteration at the joint.

6. Process according to any of Claims 1 to 5, **characterized in that**
the adhesive mass fuses with the plastic by virtue of the activation process.

7. Process according to any of Claims 1 to 6, **characterized in that**
the adhesive mass can be activated by means of ultrasound welding and/or high-frequency welding.

8. Process according to any of the preceding claims, **characterized in that**
the adhesive mass can be activated within a processing time of less than 5 sec., preferably less than 2 sec., more preferably less than 1 sec.

9. Process according to any of the preceding claims, **characterized in that**
the same can withstand a load immediately after cooling to room temperature.

10. Process according to any of the preceding claims, **characterized in that**
the sheet has been designed so as not to comprise a support.

11. Process according to any of Claims 1 to 9, **characterized in that**
the sheet comprises a permanent support.

12. Process according to any of the preceding claims, **characterized in that**
the adhesive mass has high adhesion to plastic.

13. Process according to any of the preceding claims, **characterized in that**
the adhesive mass has been designed to provide permanent connection between plastics elements, in particular made of plastics that differ from one another.

14. Process according to Claim 13, **characterized in that**
the adhesive mass has been designed to provide permanent connection between plastics elements (1, 2) made of different plastics with a different melting point,
in particular made of plastics with a melting-point difference of up to 30°C, preferably with a melting-point difference

of up to 50°C.

15. Process according to any of the preceding claims, **characterized in that** the adhesive mass is a phenolic-resin-based adhesive mass.

16. Process according to any of Claims 1 to 15, **characterized in that** the adhesive mass is based on a nitrile rubber.

**Revendications**

1. Procédé pour assembler deux éléments en matière plastique (1, 2), en particulier pour la fabrication d'un boîtier en matière plastique, au moyen d'un élément de jonction (3), dans lequel l'élément de jonction (3) est réalisé sous forme d'élément plat avec au moins une masse adhésive et la masse adhésive n'est tout d'abord pas collante, dans lequel on dispose l'élément de jonction (3) entre les éléments en matière plastique (1, 2), et dans lequel on active la masse adhésive et on assemble les éléments en matière plastique (1, 2) l'un à l'autre de façon permanente au moyen de l'élément de jonction (3).

2. Procédé selon la revendication 1, **caractérisé en ce que** l'on assemble l'un à l'autre deux éléments en matière plastique (1, 2) en matières plastiques différentes l'une de l'autre, en particulier avec des points de fusion différents l'un de l'autre, de préférence avec une différence de points de fusion jusqu'à 30°C, de préférence avec une différence de points de fusion jusqu'à 50°C.

3. Procédé selon la revendication 1 ou 2, **caractérisé en ce que** l'on effectue l'activation de la masse adhésive par soudage aux ultrasons et/ou par soudage à haute fréquence.

4. Procédé selon l'une quelconque des revendications 1 à 3, **caractérisé en ce que** l'on effectue l'activation de la masse adhésive en une durée de traitement de moins de 5 s, de préférence de moins de 2 s, et de préférence encore de moins de 1 s.

5. Procédé selon l'une quelconque des revendications 1 à 4, **caractérisé en ce que** les éléments en matière plastique (1, 2) ne subissent essentiellement aucun changement de structure.

6. Procédé selon l'une quelconque des revendications 1 à 5, **caractérisé en ce que** la masse adhésive fond avec la matière plastique par l'activation.

7. Procédé selon l'une quelconque des revendications 1 à 6, **caractérisé en ce que** la masse adhésive peut être activée par soudage aux ultrasons et/ou par soudage à haute fréquence.

8. Procédé selon l'une quelconque des revendications précédentes, **caractérisé en ce que** la masse adhésive peut être activée en une durée de traitement inférieure à 5 s, de préférence inférieure à 2 s, et de préférence encore inférieure à 1 s.

9. Procédé selon l'une quelconque des revendications précédentes, **caractérisé en ce que** la même peut être chargée immédiatement après le refroidissement à la température ambiante.

10. Procédé selon l'une quelconque des revendications précédentes, **caractérisé en ce que** l'élément plat est réalisé sans support.

11. Procédé selon l'une quelconque des revendications 1 à 9, **caractérisé en ce que** l'élément plat présente un support permanent.

12. Procédé selon l'une quelconque des revendications précédentes, **caractérisé en ce que** la masse adhésive présente un pouvoir adhésif élevé sur la matière plastique.

13. Procédé selon l'une quelconque des revendications précédentes, **caractérisé en ce que** la masse adhésive est composée de façon à assembler de façon permanente des éléments en matière plastique, en particulier en matières plastiques différentes l'une de l'autre.

**14.** Procédé selon la revendication 13, **caractérisé en ce que** la masse adhésive est composée de façon à assembler de façon permanente l'un à l'autre des éléments en matière plastique (1, 2) en matières plastiques différentes, avec un point de fusion différent, en particulier en matières plastiques avec une différence de points de fusion jusqu'à 30°C, de préférence avec une différence de points de fusion jusqu'à 50°C.

**15.** Procédé selon l'une quelconque des revendications précédentes, **caractérisé en ce que** la masse adhésive est une masse adhésive à base de résine phénolique.

**16.** Procédé selon l'une quelconque des revendications 1 à 15, **caractérisé en ce que** la masse adhésive est basée sur un caoutchouc nitrile.

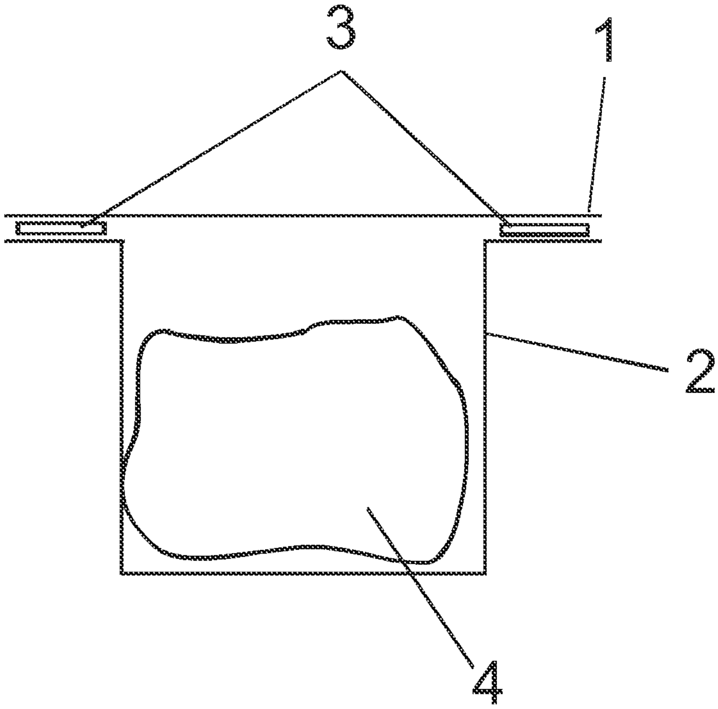


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005037662 A1
- DE 102005037663 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1


### In der Beschreibung aufgeführte Nicht-Patentliteratur


- **T.G. FOX.** *Bull. Am. Phys. Soc.,* 1956, vol. 1, 123
- **HOUBEN WEYL.** *Methoden der Organischen Chemie,* vol. E 19a, 60-147
- **HAWKER.** *Beitrag zur Hauptversammlung der American Chemical Society,* 1997
- **HUSEMANN.** *Beitrag zum IUPAC World-Polymer Meeting,* 1998
- *Macromolecules,* 1995, vol. 28, 7886
- *Macromolecules,* 2000, vol. 33, 243-245
- Ullmanns Enzyklopädie der technischen Chemie. vol. 12, 525-555